# FASCICULE DE BREVET EUROPEEN

(11) **EP 2 449 639 B1**
(45) Date de publication et mention de la délivrance du brevet: **11.06.2014**
(21) Numéro de dépôt: 10745370.6
(22) Date de dépôt: 29.06.2010
(51) Int. Cl.: H02G 1/16, H02G 15/20

(54) **MAINTENANCE POUR CABLES ELECTRIQUES PAR AUTO-CICATRISATION**
WARTUNG VON ELEKTROKABELN DURCH SELBSTREPARATUR
MAINTENANCE OF ELECTRIC CABLES BY SELF-REPAIRING

(30) Priorité: 30.06.2009 FR 0954463
(43) Date de publication de la demande: 09.05.2012
(73) Titulaire: Electricité de France, 75008 Paris (FR)
(72) Inventeur: BERTRAND, Yves, F-77250 Veneux-les-sablons (FR); MARTIN, Céline, F-38140 Rives (FR); MORTHA, Gérard, F-73800 Laissaud (FR)
(74) Mandataire: Cabinet Plasseraud
(86) Numéro de dépôt international: PCT/FR2010/051359
(87) Numéro de publication internationale: WO 2011/001104

(56) Documents cités:
- EP-A1- 0 556 522
- WO-A1-99/33071
- FR-A1- 2 197 785
- US-A- 2 029 546
- US-B1- 7 285 306

## Description

La présente invention concerne une maintenance d'un câble électrique qui comprend au moins un conducteur électrique entouré d'une gaine externe qui contient une huile isolante répartie autour du conducteur électrique, tel qu'un câble à huile fluide ou un câble oléostatique.

Dans de tels câbles, l'huile est introduite dans le câble au cours du procédé de fabrication du câble électrique ou peut être injectée dans le câble après sa fabrication à partir d'un ou plusieurs réservoirs d'huile. Pour certaines applications, le câble peut être enterré et au moins un réservoir d'huile, qui est connecté au câble souterrain, peut être disposé à au moins une des extrémités du câble dans une station de pressurisation de l'huile par exemple.

Toutefois, des fuites d'huile accidentelles peuvent survenir à travers la gaine externe du câble. Ces fuites peuvent être dues au vieillissement de la gaine, par exemple. On peut alors détecter une diminution du niveau d'huile dans l'un des réservoirs d'huile, et il est alors nécessaire de rechercher l'endroit de la fuite puis de la colmater. La localisation et la réparation des fuites sont des opérations lourdes et complexes à mettre en oeuvre, qui nécessitent toujours *in fine* d'importants travaux de terrassement qui sont généralement réalisés en milieu urbain.

On peut injecter dans l'huile un agent chimique spécifique qui diffuse dans l'huile du câble et s'échappe du câble au niveau de la fuite. La position de la fuite peut alors être identifiée avec une précision de quelques mètres seulement le long du câble en détectant les émanations de l'agent chimique à travers le sol. Toutefois, cette méthode de localisation de fuite par traceur chimique présente plusieurs inconvénients, à savoir :
- Elle nécessite encore de creuser une portion de tranchée sur quelques mètres pour réparer la fuite.
- Elle nécessite d'utiliser un détecteur de gaz de type spectromètre de masse, qui est coûteux, encombrant et d'utilisation complexe.
- Le gaz qui se dégage par la fuite peut nuire à l'environnement.

La présente invention vient améliorer la situation.

A cet effet, la présente invention propose un procédé de maintenance d'un câble électrique qui comprend au moins un conducteur électrique entouré d'une gaine externe qui contient une huile isolante répartie autour du conducteur électrique. Selon la présente invention, le procédé consiste à ajouter dans l'huile isolante du câble une huile siccative qui est sélectionnée pour se solidifier au contact de l'air, en proportion choisie pour colmater une fuite éventuelle d'huile qui apparaîtrait accidentellement à travers la gaine externe.

Lorsqu'une fuite diffuse d'huile se produit au niveau de la gaine externe du câble, par exemple à travers une porosité due au vieillissement de cette gaine, l'huile siccative contenue dans l'huile du câble entre au contact de l'air. L'huile siccative polymérise alors et provoque la solidification du mélange d'huiles réalisant le colmatage de l'orifice de fuite. L'épanchement d'huile à l'extérieur du câble est ainsi arrêté, évitant une pollution de l'environnement du câble. La gaine externe du câble est alors de nouveau étanche, grâce à un film d'huile solidifiée.

Par ailleurs, le procédé de maintenance de câble électrique selon l'invention permet de réparer une lésion de la gaine externe du câble dès son apparition sans qu'une intervention directe d'un opérateur sur cette gaine elle-même soit nécessaire. Notamment aucune tranchée d'accès jusqu'au câble n'est nécessaire.

Ainsi, avantageusement, on évite précocement une fuite d'huile ou d'une autre substance qui peut être préjudiciable pour l'environnement.

Un autre avantage que procure l'invention est qu'il n'est pas nécessaire de creuser de tranchée pour réparer une fuite d'huile vers l'extérieur.

Un autre avantage du procédé au sens de l'invention est qu'il est compatible aussi bien avec des câbles électriques à huile fluide qu'avec des câbles oléostatiques. En outre, ces câbles peuvent déjà avoir été installés avant la présente invention.

Encore un autre avantage de l'invention est que le procédé de maintenance d'un câble électrique est ainsi très peu coûteux et simple à mettre en oeuvre car il ne nécessite pas l'utilisation d'un matériel coûteux, encombrant et d'utilisation complexe, tel qu'un spectromètre de masse.

Enfin, le procédé selon l'invention est aussi efficace pour supprimer une fuite d'huile à travers une ouverture accidentelle de la gaine externe du câble.

Selon un premier perfectionnement de l'invention, l'huile siccative polymérise au contact du dioxygène, typiquement à l'air ambiant par exemple. Ainsi, lorsqu'une fuite d'huile se produit à travers la gaine externe, l'huile siccative entre en contact avec le dioxygène qui est présent à l'extérieur du câble et polymérise. Le colmatage de la fuite est obtenu par obstruction de l'orifice de fuite.

Selon un deuxième perfectionnement de l'invention, lorsque le câble électrique communique avec au moins un réservoir d'huile, l'huile siccative peut être ajoutée dans l'huile isolante du câble via un ou plusieurs de ces réservoirs d'huile. Le procédé de maintenance peut donc être mis en oeuvre facilement de cette façon, notamment pour des câbles à huile fluide et pour des câbles oléostatiques, déjà installés avant la mise en oeuvre de la présente invention. En particulier, il peut s'agir d'un câble électrique enterré avec des réservoirs d'huile directement accessibles au niveau des stations de pressurisation localisées à au moins une extrémité du câble et optionnellement le long du câble, sans déterrement nécessaire. Un procédé de maintenance selon l'invention permet donc de colmater une fuite sans qu'il soit nécessaire de creuser une tranchée pour dégager la portion de câble électrique qui comporte une fuite.

Selon un troisième perfectionnement de l'invention, l'huile isolante du câble peut être maintenue sous pression dans la gaine externe sans modification des moyens mis en oeuvre au niveau des stations de pressurisation. En effet, la mise sous pression de l'huile du câble permet d'éviter la formation de bulles qui peuvent être à l'origine d'arcs électriques susceptibles de détériorer l'isolation électrique du câble.

La présente invention propose aussi un dispositif de câble électrique auto-cicatrisant qui comprend :
- au moins un conducteur électrique,
- une gaine externe qui est disposée autour du conducteur électrique, et qui contient une huile isolante répartie autour du conducteur électrique.

Dans un tel dispositif de câble selon l'invention, la composition de l'huile isolante du câble comprend au moins une huile siccative. La proportion de l'huile siccative dans la composition de l'huile du câble est choisie pour colmater une fuite éventuelle d'huile à travers la gaine externe.

Dans des modes de mise en oeuvre différents de la présente invention, l'huile siccative peut être une huile végétale telle qu'une huile de lin ou une huile de bois de Chine, aussi appelée « huile de Tung », ou un mélange d'huile de lin et d'huile de Tung.

Selon un perfectionnement du dispositif de la présente invention, la composition finale de l'huile du câble peut comprendre en outre un catalyseur de polymérisation. L'addition d'un tel catalyseur de polymérisation favorise et/ou accélère la polymérisation de l'huile siccative. Le colmatage de la fuite est alors plus rapide. En particulier, la composition du catalyseur de polymérisation peut comprendre un sel de cobalt. Le sel de cobalt favorise la réaction de l'huile siccative avec le dioxygène ce qui assure un amorçage efficace de la réaction de polymérisation de l'huile siccative et permet ainsi un colmatage plus rapide d'une fuite d'huile à travers la gaine externe.

Selon encore une autre caractéristique de l'invention, le câble électrique peut être adapté pour supporter une pression de l'huile du câble qui est comprise entre 1 et 20 bars. Le câble peut alors contenir l'huile du câble sous pression suffisante pour diminuer un risque de formation de bulles, et ce nonobstant la présence d'huile siccative dans l'huile du câble.

D'autres caractéristiques et avantages de l'invention apparaîtront à l'examen de la description détaillée ci-après, et des dessins sur lesquels :
- la figure 1 est une coupe transversale d'un câble électrique à huile fluide (monophasé) auquel l'invention peut être appliquée,
- la figure 2 illustre schématiquement une mise en oeuvre particulière d'une liaison complète d'un câble conforme à la figure 1, et
- la figure 3 est une coupe transversale d'un câble électrique oléostatique (triphasé) auquel l'invention peut être appliquée.

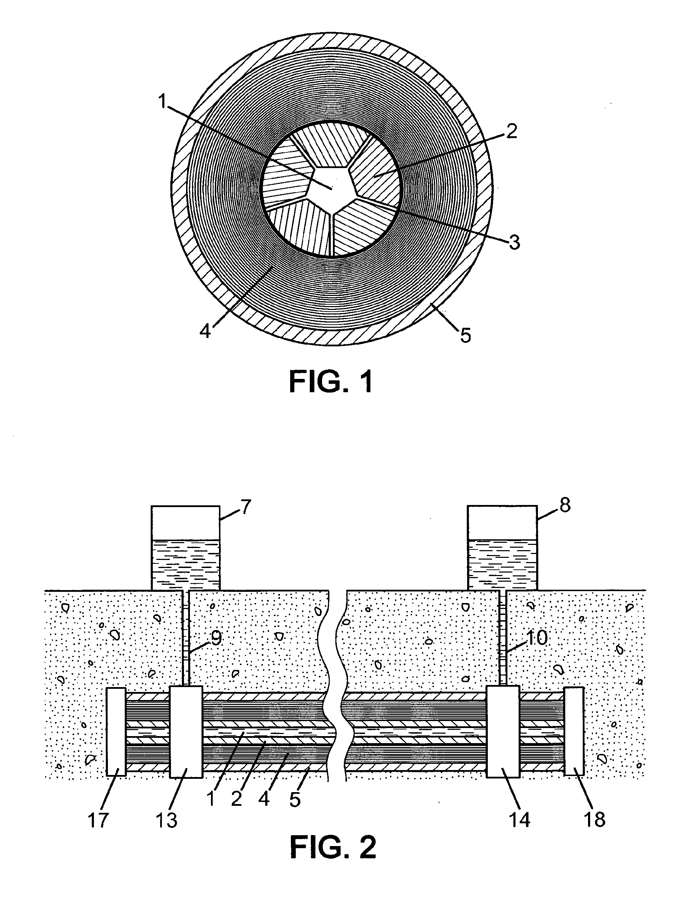

Dans le mode de réalisation qui est illustré par la figure 1, un conducteur électrique 2 de câble électrique présente la forme d'une âme creuse segmentée en plusieurs secteurs baignant dans de l'huile isolante.

Au centre du câble, un canal d'huile 1 est délimité par des faces internes des secteurs. Ce canal permet l'approvisionnement du câble par un liquide isolant, tel qu'une huile. Selon l'invention, le liquide contient au moins une huile à base d'hydrocarbures, telle qu'une huile minérale, et une huile siccative, par exemple une huile végétale, ajoutée à l'huile minérale, et éventuellement un catalyseur de polymérisation.

L'huile siccative peut être introduite dans l'huile du câble déjà présente dans le canal 1 lorsque le câble a été installé avant la présente invention.

Pour des câbles à huile fluide, l'huile du câble à laquelle est ajoutée l'huile siccative est statique ou mise en mouvement dans le canal d'huile 1, et est soumis à une pression faible, inférieure à 5 bars, de préférence comprise entre 1 et 2 bars.

Optionnellement, le conducteur électrique 2 peut être entouré par une-couche de blindage de l'âme 3.

Le conducteur électrique 2, avec le blindage de l'âme 3 éventuel, est entouré par des rubans d'un matériau isolant électrique poreux 4 qui sont enroulés en couches successives. Ce matériau isolant, qui peut être du papier par exemple, est imprégné par un mélange d'huile du câble et d'huile siccative. Ce mélange d'huiles, qui est présent dans le canal d'huile 1, peut circuler jusqu'au matériau d'isolation 4, en passant entre les secteurs du conducteur électrique 2 et au travers du blindage éventuel de l'âme 3.

Le matériau isolant 4 qui est ainsi imprégné par le mélange d'huiles est lui-même entouré par une gaine externe 5, dont l'une des fonctions est de maintenir le mélange d'huiles à l'intérieur du câble électrique.

En se référant à la figure 2, un câble électrique tel que décrit précédemment est enterré dans le sol. Des réservoirs d'huile 7 et 8 sont disposés aux extrémités du câble, par exemple dans des stations de pressurisation de l'huile. Un réservoir d'huile intermédiaire peut optionnellement être disposé le long du câble, par exemple dans une station de pressurisation intermédiaire.

Ces réservoirs permettent de maintenir constante la pression de l'huile dans le câble. En effet, lorsque la température du câble augmente, l'huile du câble se dilate et le volume d'huile dans la liaison complète augmente. Inversement, lorsque la température du câble diminue, le volume d'huile dans la liaison complète diminue. Ainsi, les réservoirs d'huile des stations de pressurisation se comportent comme des vases d'expansion pour l'huile du câble et permettent de compenser une variation du volume de l'huile du câble qui est liée à une variation de température du câble, tout en maintenant constante la pression de l'huile dans le câble.

Pour cela, les réservoirs 7 et 8, qui sont situés à proximité des extrémités du câble, sont reliés à un circuit hydraulique du câble par le biais de circuits hydrauliques intermédiaires respectifs 9 et 10 et d'accessoires de raccordement respectifs 13 et 14. Chacun des accessoires de raccordement 13 et 14 permet de séparer le circuit hydraulique d'huile du câble du circuit électrique du câble et d'assurer la continuité du circuit hydraulique d'huile. Des modules de terminaison du câble 17 et 18, communément appelés « extrémités de câble», assurent une continuité du circuit électrique du câble, et une isolation du circuit hydraulique d'huile du câble. La continuité du circuit hydraulique d'huile du câble est assurée par les accessoires de raccordement 13 et 14, lesquels sont reliés aux réservoirs 7 et 8 via respectivement les circuits hydrauliques intermédiaires 9 et 10.

Les réservoirs 7 et 8 sont localisés dans des installations, telles que les stations de pressurisation, permettant à un opérateur d'accéder facilement à ces réservoirs. La configuration de la liaison complète d'un câble qui est illustrée à la figure 2, est conforme aux installations de câbles à huile fluide qui sont déjà connues.

Lorsque l'huile siccative est introduite dans les réservoirs d'huile 7 et 8, elle diffuse dans l'huile déjà présente dans le câble par l'intermédiaire des circuits hydrauliques intermédiaires respectifs 9 et 10 et des accessoires de raccordement respectifs 13 et 14.

Le câble peut présenter une fuite, par exemple à cause d'un vieillissement de sa gaine externe 5. Le mélange d'huiles s'écoule alors à travers la gaine externe 5 vers l'extérieur du câble, ce qui provoque une pollution- de l'environnement. En outre, une telle fuite d'huile peut provoquer une chute de pression et engendrer une formation de bulles à l'intérieur du câble, notamment dans le matériau isolant 4 d'un câble à huile fluide. Des arcs électriques peuvent alors se produire et causer des dommages irréversibles dans le câble.

On peut prévoir alors deux mises en oeuvre possibles pour éviter de tels dommage : un ajout d'huile siccative à titre préventif ou un ajout d'huile siccative en cas de détection de fuite.

Ainsi, selon une première mise en oeuvre de la présente invention, l'huile siccative peut être initialement ajoutée dans l'huile du câble en l'absence de fuite. L'ajout de l'huile siccative à l'huile du câble produit alors un colmatage de la fuite dès l'apparition de celle-ci. En effet, l'huile siccative polymérise au contact du dioxygène, typiquement à l'air ambiant qui est présent à l'extérieur du câble à l'endroit de la fuite. Le colmatage qui est obtenu est particulièrement précoce.

Selon une autre mise en oeuvre de l'invention, l'huile siccative est ajoutée à l'huile du câble dans les réservoirs d'huile 7, 8, lorsque la fuite est détectée. En effet, si une fuite d'huile se produit, on détecte cette fuite en relevant une baisse de niveau d'huile dans l'un au moins des réservoirs 7 et 8. La fuite est alors colmatée par la polymérisation de l'huile siccative sans intervention supplémentaire d'un opérateur, autre que l'ajout d'huile siccative dans le réservoir. La diffusion de l'huile siccative dans l'huile du câble où se produit la fuite peut être rapide lorsque l'huile du câble est mise en mouvement dans le canal d'huile 1. Pour un câble à huile fluide dit « à circulation d'huile », l'huile du câble est mise en circulation de manière permanente dans le canal d'huile 1. Pour d'autres types de câbles à huile fluide, l'huile du câble peut être mise en mouvement oscillant d'aller et retour dans le canal d'huile 1 en augmentant alternativement la pression de l'huile dans une station de pressurisation à une extrémité du câble et en la diminuant alternativement dans la station de pressurisation à l'autre extrémité du câble. Grâce à cette mise en mouvement d'huile dans le câble, la vitesse de diffusion de l'huile siccative dans l'huile du câble est accrue et le colmatage de la fuite par polymérisation de l'huile siccative est plus rapide.

L'invention s'applique à tout câble comportant au moins un conducteur électrique et une gaine externe qui est disposée autour du conducteur électrique et qui contient une huile répartie autour du conducteur électrique. De manière connue, les câbles à huile fluide et les câbles oléostatiques présentent une telle structure.

On rappelle en effet que l'isolation électrique d'un conducteur électrique d'un câble à huile fluide est obtenue par un enroulement de couches successives d'un matériau isolant électrique poreux imprégné d'une huile, par exemple par un enroulement de papier. Une gaine externe entoure le matériau isolant et contient l'huile à l'intérieur du câble.

Un câble oléostatique comprend plusieurs phases assemblées, généralement trois, qui comportent chacune un conducteur électrique qui est entouré par une gaine d'isolation. Une gaine externe entoure les phases et contient une huile répartie autour des phases à l'intérieur du câble.

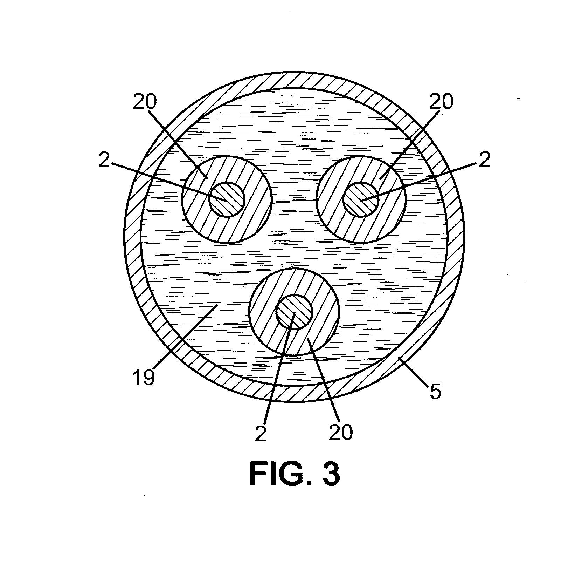

Selon un mode de réalisation d'un câble oléostatique illustré en coupe à la figure 3, la gaine externe 5 contient l'huile isolante du câble 19 qui est répartie autour de trois phases. Chacune des phases comprend un conducteur électrique 2 et une gaine d'isolation 20 qui entoure le conducteur électrique 2. Généralement, la gaine d'isolation 20 comprend un matériau isolant électrique poreux qui est enroulé en couches successives et qui est imprégné d'une huile visqueuse

Lorsqu'une fuite d'huile se produit à travers la gaine externe 5, une chute de pression peut apparaître localement et des bulles peuvent se former à l'intérieur du câble, notamment dans la gaine d'isolation 20 d'au moins une des phases du câble oléostatique. Des arcs électriques peuvent alors se produire et causer des dommages irréversibles dans le câble. Pour éviter la formation de bulles, l'huile isolante du câble 19 est soumise à une pression élevée, qui peut être comprise entre 10 et 20 bars par exemple, de préférence entre 12 et 18 bars.

La configuration d'une liaison complète d'un câble oléostatique, qui est déjà connue, est très semblable à celle qui est illustrée à la figure 2. Le câble oléostatique est enterré dans le sol et au moins un réservoir-d'huile 7, 8 est disposé à au moins une extrémité du câble, par exemple dans une station de pressurisation de l'huile. Le réservoir d'huile 7, 8 est relié au circuit hydraulique du câble par le biais d'un circuit hydraulique intermédiaire 9, 10 et de l'accessoire de raccordement respectif 13, 14.

Pour les deux types de câbles, oléostatique et à huile fluide, l'ajout d'huile siccative, qui présente généralement une viscosité élevée, dans l'huile du câble confère au mélange d'huiles une viscosité qui est supérieure à celle de l'huile du câble initiale. Ainsi, si une fuite se produit à travers la gaine externe 5 du câble, le débit de la fuite d'huile est réduit par l'ajout d'huile siccative, grâce à la viscosité accrue du mélange d'huiles, avant même le colmatage complet de la fuite qui résulte de la polymérisation de l'huile siccative. La pollution du sol autour du câble est donc déjà réduite grâce à la viscosité supérieure que procure l'huile siccative à l'huile du câble.

Une huile siccative, par exemple de l'huile de lin ou de l'huile de bois de Chine, aussi appelée huile de Tung, est ajoutée dans l'huile du câble en proportion choisie pour colmater la fuite. La proportion d'huile siccative ajoutée est en outre choisie pour conserver l'isolation électrique élevée qui est procurée par le matériau isolant poreux imprégné par le mélange d'huiles. Par ailleurs, un tel mélange peut présenter des propriétés hydrauliques, et notamment une viscosité, qui sont différentes de celles de l'huile du câble initiale. La proportion d'huile siccative est alors en outre choisie de préférence pour modifier peu ou pas le comportement hydraulique du câble. Ce comportement hydraulique peut notamment être caractérisé par un profil rhéologique du mélange d'huiles, et par la diffusion (ou « diffusibilité » en l'espèce) radiale du mélange d'huiles au travers des matériaux présents depuis le canal d'huile 1 jusqu'à la face interne de la gaine externe 5.

Il existe alors un compromis pour le choix de la proportion d'huile siccative ajoutée dans l'huile du câble :
- la proportion d'huile siccative doit être suffisamment faible pour conserver au mieux les comportements électrique et hydraulique du câble. Ainsi, la proportion d'huile siccative dans la composition de l'huile du câble est de préférence inférieure à 50 % (pourcent) en masse, plus préférablement inférieure à 30 % en masse ;
- la proportion d'huile siccative est de préférence suffisamment élevée pour colmater rapidement et efficacement une fuite d'huile à travers la gaine externe 5 du câble. Ainsi, la proportion d'huile siccative dans le mélange d'huiles est de préférence supérieure à 5 % en masse, encore plus de préférence supérieure à 10 % en masse.

Ainsi, la proportion d'huile siccative dans la composition de l'huile isolante du câble peut être comprise entre 5 % et 50 %, de préférence entre 10 % et 30%.

Pour optimiser ce compromis, l'huile isolante du câble au sens de l'invention peut comprendre un catalyseur de polymérisation qui comporte un sel minéral, par exemple un sel de cobalt. En effet, un tel catalyseur favorise et/ou accélère la polymérisation de l'huile siccative au contact du dioxygène. Ainsi, lorsqu'une fuite se produit à travers la gaine externe 5, l'huile siccative polymérise plus rapidement et produit un colmatage plus rapide et plus efficace, pour une proportion d'huile siccative dans le mélange qui peut être réduite. En raison de la présence de dioxygène en faible quantité à l'intérieur du câble, la proportion de catalyseur de polymérisation dans le mélange d'huiles peut être inférieure à 10 % en masse, de préférence inférieure à 5% en masse, pour éviter une polymérisation de l'huile siccative à l'intérieur du câble en l'absence de fuite.

Une adaptation des proportions dans le mélange d'huiles, c'est-à-dire des proportions dans la composition de l'huile du câble telle qu'elle résulte de l'utilisation de l'invention, est possible, notamment en fonction de la vitesse qui est désirée pour le colmatage.

Selon un mode de réalisation préféré de l'invention, la fabrication du mélange de l'huile du câble et de l'huile siccative peut comporter les étapes suivantes :
- dissolution dans l'huile siccative du sel minéral qui constitue le catalyseur de polymérisation, à une température supérieure à 40 °C, de préférence supérieure à 50°C, puis
- mélange de l'huile siccative qui comprend le sel minéral dissout avec l'huile du câble initiale.

Dans un exemple de réalisation, la composition du mélange d'huiles qui imprègne le matériau isolant 4 d'un câble à huile fluide peut comprendre :
- environ 20 % en masse d'huile de Tung,
- environ 1 % en masse de sel de cobalt, et
- le complément (environ 79 % en masse) d'huile fluide standard, par exemple d'huile de référence T 3788 DUSSEK CAMPBELL ®.

Le mélange ainsi obtenu est homogène et présente une viscosité satisfaisante, notamment pour une application de circulation de l'huile fluide dans le câble.

En outre, ce mélange, d'après les essais réalisés, permet de colmater en moins de vingt-quatre heures une fuite à travers la gaine externe 5 d'un câble à huile fluide, dans lequel le mélange est soumis à une pression de 1,5 bars, et avec un débit initial de fuite d'huile qui est supérieur à 250 litres par semaine.

Il est entendu que l'invention n'est pas limitée à ses mises en oeuvre dans des câbles dont les structures correspondent aux figures 1 et 3. Le câble peut notamment incorporer des éléments constitutifs additionnels. En outre, il est précisé que l'âme conductrice du câble à huile fluide peut avoir une réalisation différente de celle à base de secteurs séparés et que la couche de blindage 3 de l'âme 2 n'est pas indispensable pour l'invention.

## Revendications

1. Procédé de maintenance d'un câble électrique comprenant au moins un conducteur électrique (2) entouré d'une gaine externe (5), ladite gaine externe (5) contenant une huile isolante (19) répartie autour dudit conducteur électrique (2),
**caractérisé en ce que** l'on ajoute dans l'huile isolante du câble (19) une huile siccative sélectionnée pour se solidifier au contact de l'air et en proportion choisie pour colmater une fuite éventuelle d'huile à travers la gaine externe (5).

2. Procédé selon la revendication 1, **caractérisé en ce que** l'huile siccative polymérise au contact du dioxygène.

3. Procédé selon l'une quelconque des revendications précédentes, dans lequel ledit câble électrique communique avec au moins un réservoir d'huile (7, 8), et **caractérisé en ce que** l'huile siccative est ajoutée à l'huile isolante du câble (19) dans ledit réservoir d'huile (7, 8).

4. Procédé selon la revendication 3, **caractérisé en ce que** ledit câble est enterré tandis que ledit réservoir (7, 8) est directement accessible sans déterrement.

5. Procédé selon l'une quelconque des revendications précédentes, **caractérisé en ce que** l'huile isolante du câble (19) est maintenue sous pression dans ladite gaine externe (5).

6. Dispositif de câble électrique auto-cicatrisant comprenant :
- au moins un conducteur électrique (2),
- une gaine externe (5) disposée autour dudit conducteur électrique (2), ladite gaine externe (5) contenant une huile isolante (19) répartie autour dudit conducteur électrique (2),
**caractérisé en ce qu'**une composition de l'huile isolante du câble (19) comprend au moins une huile siccative, une proportion de l'huile siccative dans la composition de l'huile du câble (19) étant choisie pour colmater une fuite éventuelle d'huile à travers la gaine externe (5).

7. Dispositif selon la revendication 6, **caractérisé en ce qu'**une composition de l'huile siccative comprend une huile de lin.

8. Dispositif selon l'une quelconque des revendications 6 et 7, **caractérisé en ce qu'**une composition de l'huile siccative comprend une huile de bois de Chine.

9. Dispositif selon l'une quelconque des revendications 6 à 8, **caractérisé en ce que** la proportion d'huile siccative dans la composition de l'huile isolante du câble (19) est comprise entre 5 % et 50 %.

10. Dispositif selon la revendication 9, **caractérisé en ce que** ladite proportion d'huile siccative est comprise entre 10 % et 30 %.

11. Dispositif selon l'une quelconque des revendications 6 à 10, **caractérisé en ce que** la composition de l'huile isolante du câble (19) comprend en outre un catalyseur de polymérisation, pour favoriser et/ou accélérer une polymérisation de l'huile siccative.

12. Dispositif selon la revendication 11, **caractérisé en ce qu'**une composition du catalyseur de polymérisation comprend un sel de cobalt.

13. Dispositif selon l'une quelconque des revendications 11 et 12, **caractérisé en ce qu'**une proportion dudit catalyseur de polymérisation dans la composition de l'huile isolante du câble (19) est inférieure à 5 %.

14. Dispositif selon l'une quelconque des revendications 6 à 13, **caractérisé en ce que** le câble électrique est adapté pour supporter une pression de l'huile isolante du câble (19) comprise entre 1 et 20 bars.

## Patentansprüche

1. Verfahren zur Wartung eines elektrischen Kabels, das mindestens einen elektrischen Leiter (2) umfasst, der von einer äußeren Hülle (5) umgeben ist, wobei die äußere Hülle (5) ein Isolieröl (19) umfasst, das um den elektrischen Leiter (2) verteilt ist,
**dadurch gekennzeichnet, dass** dem Isolieröl des Kabels (19) ein austrocknendes Öl zugesetzt wird, das ausgewählt wird, damit es sich bei Kontakt mit Luft verfestigt, und dessen Anteil gewählt ist, um ein eventuelles Leck, durch das Öl durch die externe Hülle (5) austritt, abzudichten.

2. Verfahren nach Anspruch 1, **dadurch gekennzeichnet, dass** das austrocknende Öl bei Kontakt mit Sauerstoff polymerisiert.

3. Verfahren nach einem beliebigen der vorherigen Ansprüche, wobei das elektrische Kabel mit mindestens einem Ölreservoir (7, 8) in Verbindung steht, und **dadurch gekennzeichnet, dass** das austrocknende Öl dem Isolieröl des Kabels (19) in dem Ölreservoir (7, 8) zugesetzt wird.

4. Verfahren nach Anspruch 3, **dadurch gekennzeichnet, dass** das Kabel vergraben ist, während das Reservoir (7, 8) ohne Ausgraben zugänglich ist.

5. Verfahren nach einem beliebigen der vorherigen Ansprüche, **dadurch gekennzeichnet, dass** das Isolieröl des Kabels (19) unter Druck in der äußeren Hülle (5) gehalten wird.

6. Selbstvernarbende elektrische Kabelvorrichtung umfassend:
- mindestens einen elektrischen Leiter (2),
- eine äußere Hülle (5), die um den elektrischen Leiter (2) angeordnet ist, wobei die äußere Hülle (5) ein Isolieröl (19) umfasst, das um den elektrischen Leiter (2) verteilt ist,
**dadurch gekennzeichnet, dass** eine Isolierölzusammensetzung des Kabels (19) mindestens ein austrocknendes Öl umfasst, wobei ein Anteil des austrocknenden Öles in der Ölzusammensetzung des Kabels (19) so ausgewählt ist, um ein eventuelles Leck, durch das Öl durch die externe Hülle (5) austritt, abzudichten.

7. Vorrichtung nach Anspruch 6, **dadurch gekennzeichnet, dass** eine austrocknende Ölzusammensetzung ein Leinöl umfasst.

8. Vorrichtung nach einem beliebigen der Ansprüche 6 und 7, **dadurch gekennzeichnet, dass** eine austrocknende Ölzusammensetzung ein Tungöl umfasst.

9. Vorrichtung nach einem beliebigen der Ansprüche 6 bis 8, **dadurch gekennzeichnet, dass** der Anteil des austrocknenden Öles in der Isolierölzusammensetzung des Kabels (19) zwischen 5% und 50% liegt.

10. Vorrichtung nach Anspruch 9, **dadurch gekennzeichnet, dass** der Anteil des austrocknenden Öles zwischen 10 % und 30 % liegt.

11. Vorrichtung nach einem beliebigen der Ansprüche 6 bis 10, **dadurch gekennzeichnet, dass** die Isolierölzusammensetzung des Kabels (19) ferner einen Polymerisationskatalysator umfasst, um eine Polymerisation des austrocknenden Öls zu begünstigen und/oder zu beschleunigen.

12. Vorrichtung nach Anspruch 11, **dadurch gekennzeichnet, dass** eine Polymerisationskatalysatorzusammensetzung ein Kobaltsalz umfasst.

13. Vorrichtung nach einem beliebigen der Ansprüche 11 und 12, **dadurch gekennzeichnet, dass** ein Anteil des Polymerisationskatalysators in der Isolierölzusammensetzung des Kabels (19) kleiner als 5% ist.

14. Vorrichtung nach einem beliebigen der Ansprüche 6 bis 13, **dadurch gekennzeichnet, dass** das elektrische Kabel geeignet ist, um einem Isolieröldruck des Kabels (19) zwischen 1 und 20 bar standzuhalten.

## Claims

1. Method of maintenance of an electric cable comprising at least one electric conductor (2) surrounded by an outer sheath (5), said outer sheath (5) containing an insulating oil (19) distributed around said electric conductor (2), **characterized in that** a drying oil is added to the insulating cable oil (19) selected in order to solidify upon contacting the air and in a proportion chosen for sealing off a possible oil leak through the outer sheath (5).

2. Method according to claim 1, **characterized in that** the drying oil polymerizes upon contacting dioxygen.

3. Method according to any one of the previous claims, in which said electric cable is connected to at least one oil tank (7, 8), and **characterized in that** the drying oil is added to the insulating cable oil (19) in said oil tank (7, 8).

4. Method according to claim 3, **characterized in that** said cable is buried while said tank (7, 8) is directly accessible without digging up.

5. Method according to any one of the previous claims, **characterized in that** the insulating cable oil (19) is kept under pressure in said outer sheath (5).

6. Self-repairing electric cable device comprising:
- at least one electric conductor (2),
- an outer sheath (5) arranged around said electric conductor (2), said outer sheath (5) containing an insulating oil (19) distributed around said electric conductor (2),
**characterized in that** a composition of the insulating cable oil (19) comprises at least one drying oil, a proportion of the drying oil in the composition of the cable oil (19) being chosen for sealing off a possible oil leak through the outer sheath (5).

7. Device according to claim 6, **characterized in that** a drying oil composition comprises a linseed oil.

8. Device according to any one of claims 6 and 7, **characterized in that** a drying oil composition comprises a China wood oil.

9. Device according to any one of claims 6 to 8, **characterized in that** the proportion of drying oil in the composition of the insulating cable oil (19) is comprised between 5% and 50%.

10. Device according to claim 9, **characterized in that** said proportion of drying oil is comprised between 10% and 30%.

11. Device according to any one of claims 6 to 10, **characterized in that** the composition of the insulating cable oil (19) comprises moreover a polymerization catalyst, for promoting and/or accelerating polymerization of the drying oil.

12. Device according to claim 11, **characterized in that** a polymerization catalyst composition comprises a cobalt salt.

13. Device according to any one of claims 11 and 12, **characterized in that** a proportion of said polymerization catalyst in the composition of the insulating cable oil (19) is less than 5%.

14. Device according to any one of claims 6 to 13, **characterized in that** the electric cable is adapted in order to withstand a pressure of the insulating cable oil (19) comprised between 1 and 20 bar.
